# EUROPEAN PATENT SPECIFICATION

(11) **EP 2 434 679 B1**
(45) Date of publication and mention of the grant of the patent: **15.08.2018**
(21) Application number: 09844793.1
(22) Date of filing: 22.05.2009
(51) Int. Cl.: H04L 1/18

(54) **METHOD AND DEVICE FOR MANAGING HYBRID AUTOMATIC REPEAT REQUEST MULTI-PROCESS DATA**
VERFAHREN UND EINRICHTUNG ZUR VERWALTUNG VON MEHRFACHPROZESSDATEN DER HYBRID AUTOMATIC REPEAT REQUEST
PROCÉDÉ ET DISPOSITIF DE GESTION DE DONNÉES DE MULTIPROCESSUS DE DEMANDES AUTOMATIQUES DE RÉPÉTITION HYBRIDE

(43) Date of publication of application: 28.03.2012
(73) Proprietor: Sanechips Technology Co., Ltd., Shenzhen, Guangdong 518055 (CN)
(72) Inventor: BI, Min, Shenzhen Guangdong 518057 (CN); SHE, Yuanjun, Shenzhen Guangdong 518057 (CN)
(74) Representative: Gervasi, Gemma
(86) International application number: PCT/CN2009/071937
(87) International publication number: WO 2010/133041

(56) References cited:
- EP-A1- 2 061 175
- WO-A2-03/019844
- WO-A2-2009/038356
- CN-A- 1 411 244
- CN-A- 1 719 762
- CN-A- 101 174 878

## Description

### Technical Field

The present invention relates to a high speed uplink packet access (HSUPA) terminal device, and more particularly, to a method and device for hybrid automatic repeat request (HARQ) multi-process data management in a HSUPA terminal device.

### Background of the Related Art

To meet the increasing demands for high speed packet data services and better compete with other radio technologies in supporting data services, the 3GPP introduces an HSUPA technology into Rel7, and with the HSUPA technology, the peak processing speed can reach 2.2Mbps for a single-carrier TD-SCDMA terminal. The introduction of the HSUPA is aimed at rapidly processing high speed uplink data volume, and on the basis of applying high speed data transmission technology in the downlink, further providing stable and high speed uplink transmission speed, so as to improve the user experience.

The scheduling of high speed and stable uplink data in the HSUPA is maintained by a hybrid automatic repeat request (HARQ) entity. The operating principle specified in 3GPP standard is as follows: the HARQ entity in the HSUPA is implemented in a medium access control (MAC) layer and responsible for multi-process data management, and it mainly fulfills the following functions: buffering HSUPA uplink process transmission data (MAC-e data for short); providing an HARQ process ID; providing an enhanced transmission channel format combination (E-TFC) selection ID and MAC-e data assembling; providing a repeat serial number (RSN) and one power offset indication used by a physical layer (L1); and so on.

The network end uses an acknowledgement or a negative acknowledgement (ACK/NACK) information carried in an acknowledgement indication channel (E-HICH) to indicate the network receiving condition of the MAC-e data sent in a certain process in the terminal, such as correct (encoded as ACK) or incorrect (encoded as NACK). When receiving ACK/NACK for the data of a certain process and under a condition of having resource grant, the terminal respectively sends new data (covering old data in a cache)/ retransmits the old data carrying RSN information (the old data stored in the cache). A plurality of processes is performing simultaneously to increase uplink throughput. The process ID that already receives the ACK data can be used to transmit new data. The process ID receiving the NACK data should be maintained until the network end correctly receives the data of that process or up to the maximum number of retransmissions/the maximun retransmission time; for processes receiving the ACK, the E-TFC selection function can be triggered to select the size of new MAC-e data and assemble the MAC-e data within a certain time limit (in an extreme condition, operations of, such as starting from receiving authorization information from the network end, and then assembling the 2.2Mbps, i.e., 11160bit data volume via the MAC layer and transmitting them to the L1, and performing channel coding, modulating and spectrum spreading and so on to them, should be completed within seven timeslots); and for processes receiving the NACK, the E-TFC selection function of the MAC will not be triggered, and the MAC will retransmit the old data in the cache.

The key point in the abovementioned description is to acquire the ACK/NACK information corresponding to a certain process, and the terminal indirectly acquires the process ID and the ACK/NACK corresponding information according to a timing relationship between the MAC-e data sent in uplink and the received E-HICH. Generally, the first sent data will be first acknowledged by the network, and this information is only known by L1. In the above implementation method, the L1 acquires the corresponding relationship and reports it to the MAC layer, and then the relationship is maintained by the MAC layer. Moreover, the MAC layer is also involved in old data retransmission and new data transmission. With the diversified development of service formats (such as HSDPA/HSUPA, and so on) and the increase of high-speed services, management by the MAC is very complicated in both data volume processing and flow control, and it might lead to exhausting of resource of processor bus in the protocol stack.

A method of Hybrid Automatic Repeat request multi-process data management is also known from EP2061175 A1 (ZTE CORP[CN]) 20 MAY 2009(2009-05-20).

### Content of the Invention

The present invention provides a method and an apparatus for HARQ multi-process data management in HSUPA terminal device to solve the problem that MAC layer is over burdened because only the MAC layer achieves the HARQ multi-process data management in the prior art.

The features of the method and apparatus according to the present invention are defined in the independent claims.

Also provided is a method for HARQ multi-process data management in a HSUPA terminal device, and the method comprises:
a physical layer L1 of the HSUPA terminal device maintaining each process for sending HSUPA uplink process transmission data, that is, MAC-e data;
when the L1 receives a NACK information corresponding to one process, the L1 autonomously selecting the MAC-e data of the process from a cache to retransmit the MAC-e data; and
when the L1 receives an ACK information corresponding to one process, the L1 notifying a MAC layer to assemble new MAC-e data, and the L1 obtaining the new MAC-e data from the MAC layer and sending the new MAC-e data.

Furthermore, the abovementioned method might also have the following feature:
the L1 acquires the process corresponding to the ACK or the NACK according to a timing relationship between the time of sending the MAC-e data of the process and receiving the ACK or the NACK.

Furthermore, the abovementioned method might also have the following feature:
When the L1 receives the NACK information corresponding to one process and there is a transmission resource grant, the L1 selects the MAC-e data of the process from the cache to retransmit the MAC-e data;
when said HSUPA terminal device receives the ACK information corresponding to one process and there is a transmission resource grant, the L1 notifies the MAC layer to perform an E-TFC selection and assemble the new MAC-e data.

Furthermore, the abovementioned method might also have the following feature:
after the MAC layer assembles the new MAC-e data according to the notification from the LI, the MAC layer buffers the new MAC-e data to the cache corresponding to the process corresponding to the LI; and
the L1 selects the new MAC-e data from the cache corresponding to the process and sends the new MAC-e data.

Furthermore, the abovementioned method might also have the following feature:
before the MAC layer assembles the new MAC-e data, the MAC layer performs the E-TFC selection.

Furthermore, the abovementioned method might also have the following feature:
a control module of the L1 records a data status of the process according to the received NACK information or the received ACK information corresponding to the process, and maintains the data status of each process and transmission resource grant information by using a transmission status table;
when the data status of one process is the ACK and there is the transmission resource grant, the control module notifies a function module in the MAC layer to assemble the new MAC-e data; and said function module buffers the new MAC-e data in a memory module of the LI, and the control module selects the new MAC-e data to send;
when the data status of one process is the NACK and there is the transmission resource grant, the control module of the L1 directly obtains the MAC-e data of the process from a memory module of the L1 to retransmit the MAC-e data.

Furthermore, the abovementioned method might also have the following feature:
the memory module of the L1 maintains the number of retransmissions and retransmission time of the data of each process by using the transmission status table; and when reaching the maximum number of retransmissions or the maximum retransmission time, the data of the process is released and the control module is notified to change the data status of the process to the ACK.

Also provided is an apparatus for HARQ multi-process data management, and the device comprises a control module, a function module and a memory module, wherein:
said control module is located in a LI, and is used to maintain each process for sending MAC-e data; when receiving a NACK information corresponding to one process, to autonomously select the MAC-e data corresponding to the process from the memory module and retransmit the MAC-e data; and when receiving an ACK information corresponding to one process, to notify the function module to assemble new MAC-e data and obtain the new MAC-e data from said memory module and send the MAC-e data;
said function module is located in a MAC layer, and is used to assemble the new MAC-e data according to the notification from the control module and store the new MAC-e data into the memory module; and
said memory module is located in the L1 and is used to buffer the MAC-e data of each process.

Furthermore, the abovementioned apparatus might also have the following feature:
said control module is used to acquire the process corresponding to the ACK or the NACK according to a timing relationship between the time of sending the MAC-e data of the process and receiving the ACK or the NACK.

Furthermore, the abovementioned apparatus might also have the following feature:
said control module comprises a process status sub-module and a process maintenance sub-module,
said process status sub-module is used to record a data status of the process according to the received NACK information or the received ACK information corresponding to the process, and store the data status of the process into the process maintenance sub-module; and
the process maintenance sub-module is used to maintain the data status of each process and transmission resource grant information by a transmission status table; when the data status of one process is the ACK and there is a transmission resource grant, to notify the function module to assemble the new MAC-e data by using a interruption and obtain the new MAC-e data corresponding to the process from the memory module tosend the new MAC-e data out; and when the data status of one process is the NACK and there is a transmission resource grant, to directly obtain the data of the process from the memory module to retransmit.

Furthermore, the abovementioned apparatus might also have the following feature:
said memory module comprises a memory control sub-module and a data memory sub-module,
said data memory sub-module is used to buffer the MAC-e data of each process; and
said memory control sub-module is used to maintain the number of retransmissions and retransmission time of the data of each process buffered in the data memory sub-module by the transmission status table, and when the process recorded in the transmission status table reaches the maximum number of retransmissions or the maximum retransmission time, to notify the data memory sub-module to release the data of the process and notify the process maintenance sub-module to change the data status of the process to the ACK.

The present invention can respectively use the individual merits of the L1 and the MAC layer to evenly implement the HARQ multi-process management function in the HSUPA, so that the terminal can fulfill rapidly scheduling and assembling of the uplink data.

### Brief Description of Drawings

FIG. 1 is a schematic diagram of an HARQ implementation in the 3GPP standard in the prior art;
FIG. 2 is a schematic diagram of a method for HARQ multi-process data management in accordance with an embodiment of the present invention;
FIG. 3 is a schematic diagram of an apparatus for HARQ multi-process data management in accordance with an embodiment of the present invention; and
FIG. 4 is a schematic diagram of an apparatus for HARQ multi-process data management in accordance with an application example of the present invention.

### Preferred Embodiments of the Present Invention

The essential concept of the present invention is that: the L1 and the MAC layer work together to control the function of the HARQ module multi-process data management which originally is controlled centrally only by the MAC layer, where the L1 acts as the primary control and the fast scheduling of the L1 is used to implement high speed HSUPA retransmission, and the MAC layer resource is reserved as much as possible to deal centrally with generation and assembly of the new data.

Specifically, the L1 judges that the ACK/NACK corresponds to which process according to the timing relationship between the time sending the MAC-e data and receiving the ACK/NACK of one or more processes; the data buffering of each process is implemented in the LI, the process ID corresponds to the process data buffering one-to-one, and the process data buffering is maintained according to the process data status (ACK/NACK); when receiving the NACK information corresponding to a certain process and there is transmission resource grant, the L1 autonomously selects the data in the cache to perform retransmission and sets the RSN of the retransmitted data, while need not to notify the MAC layer; and when receiving the ACK information corresponding to a certain process and there is transmission resource grant, the L1 immediately sends an interrupt to notify the MAC layer to assemble new MAC-e data.

The present invention will be illustrated in detail with combination of the accompanying drawings and embodiments.

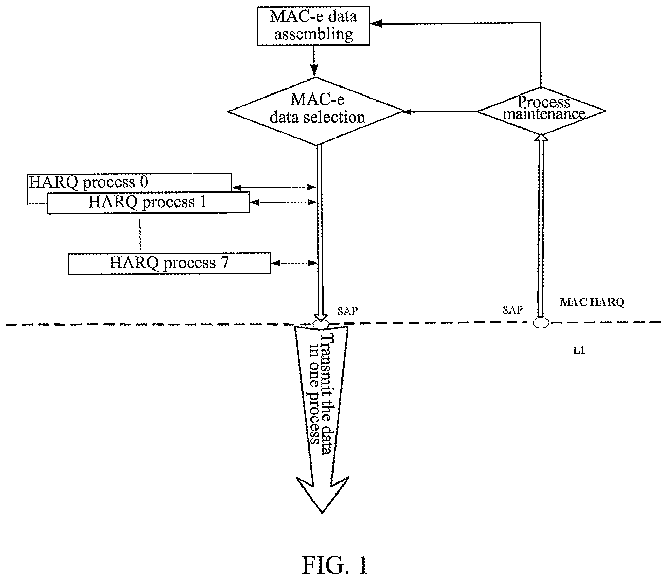

FIG. 1 is a schematic diagram of an HARQ implementation in the current 3GPP standard, wherein SAP is a service access point. According to the standard and regulation, the MAC layer fully undertakes the function for HARQ multi-process data management, including the multi-process data buffering, process data maintenance and MAC-e data assembling, and so on. The drawback of the above process management method is that the function is too centralized and the merit of the fast scheduling of the L1 is not fully used. When the MAC-e data volume reaches to the limit speed rate 2.2Mbps of single-carrier, the MAC layer need to perform assembly operations such as accessing, shifting and adding headers to 11160 bits, which makes operations of the processor bus in the MAC layer having bottleneck; the L1 layer, however, is relatively idle.

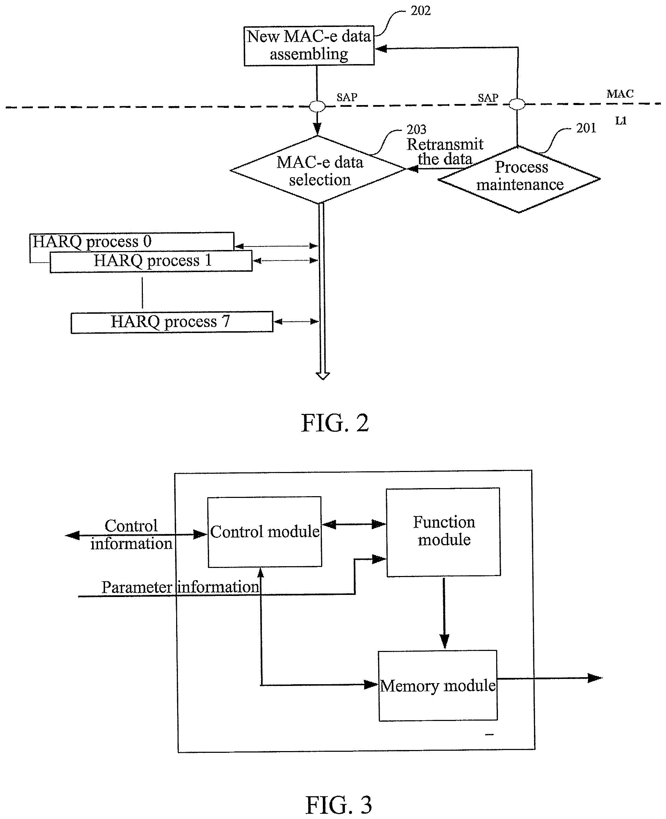

FIG. 2 is a schematic diagram of a method for HARQ multi-process data management by using a distribution mechanism in accordance with an embodiment of the present invention. In FIG. 2, the HARQ functions and a part of functions related to the HSUPA multi-process data management in the MAC layer are distributed in the L1 and the MAC layer respectively to be implemented. The HARQ functions implemented by the L1 in FIG. 2 have process maintenance, data buffering, data retransmission and judgment; the HARQ functions implemented by the MAC is mainly new data assembling.

As shown in FIG. 2, the method in accordance with an embodiment of the present invention comprises the following steps.

Step 201, the L1 maintains each process for sending the MAC-e data. When receiving the ACK information corresponding to one process, it indicates that the network end has already received correctly the data of the process sent by the terminal device, and the process can be released to transmit new data and acts as a backup process for transmitting new data in step 202; further, if the process gets a network transmission resource grant, step 202 of generating the new data can be performed. When receiving the NACK information corresponding to one process, it indicates that the network end incorrectly receives the data of the process sent by the terminal device, and the process cannot be released and it needs to re-transmit the data corresponding to the process.

Wherein, the L1 judges the process corresponding to the ACK or NACK according to the timing relationship between the MAC-e data sending time of the process and the received ACK or NACK.

Specifically, the corresponding relationship between the process and the ACK/NACK is obtained one-to-one according to the timing relationship between the sent MAC-e data and the received E-HICH channel data.

The maximum number of the processes is 8, wherein, four processes are in a scheduling mode and the other four processes are in a non-scheduling mode.

Preferably, after the data of one process is sent out, the data status of the process is Null (i.e., the status of not receiving the acknowledgement from the network); when receiving the ACK information corresponding to the process, the data status of the process is ACK (i.e., the status of correctly receiving the acknowledgement from the network), and the process can be released to be the backup process for transmitting the new data in step 202; and when receiving the NACK information corresponding to the process, the data status of the process is NACK (i.e., the status of incorrectly receiving the acknowledgement from the network), the process cannot be released and required to be used to re-transmit the data.

Step 202, the MAC layer performs the E-TFC selection for the size of the new data (i.e., the new MAC-e data) and assembling of the new data according to the power information and so on given by the network, and buffers the assembled MAC-e data into the cache space corresponding to the process in the L1.

Step 203, the L1 selects the MAC-e data corresponding to the process and sends the data.

In the step 203, the L1 judges whether a certain process is used to transmit the new data or retransmit the old data; if transmitting the new data, the data is come from step 202 and the new data is buffered in the cache in step 203, and if retransmitting the old data, the data are directly obtained and sent from the cache in step 203 corresponding to the process.

Wherein, if the data status of the process is NACK, the L1 directly selects the MAC-e data in the cache corresponding to the process to send, and selects a corresponding RSN value for the sent data. The MAC layer does not participate in data retransmission; and
if the data status of the process is ACK, the L1 selects the new MAC-e data in the cache corresponding to the process to send.

From FIG. 2, it can be seen that the present invention performs the distribution processing for the MAC HARQ functions according to the features of the MAC and the L1 in signal processing. The L1 can be the primary control, which is beneficial for the fast scheduling of the data.

As shown in FIG. 3, the apparatus in accordance with an embodiment of the present invention comprises a control module (harq_control), a function module (harq_func) and a memory module (harq_memory),
wherein, said control module and memory module are located in the L1, and the function module is located in the MAC layer.

The control module is used to maintain each process for sending the MAC-e data. When receiving the NACK information corresponding to one process, the control module autonomously selects the MAC-e data corresponding to the process in the memory module to retransmit the data. When receiving the ACK information corresponding to one process and the process further has a transmission resource grant, the control module notifies the function module to perform the E-TFC selection and assemble the new MAC-e data, and then acquires the new MAC-e data from the memory module and sends the new MAC-e data.

The function module is used to perform the E-TFC selection and assemble the new MAC-e data according to notifying by the control module, and to store the new MAC-e data in the memory module.

Said memory module is used to buffer the MAC-e data of each process.

Preferably, in the control module, a process status table shown in Table 1 is used to maintain the relationship among the process ID, the data status of the process and the transmission resource grant, and the table comprises three items: process ID, data status of the process and transmission resource grant of the process, as shown in the following table:

**Table 1 Process Status Table**

| | | |
|---|---|---|
| Process ID | Data status (Ack/nack/null) | Transmission resource grant (Grant/No Grant) |

This process status table is maintained with 8 groups of register units which correspond to 8 processes respectively.

Wherein, the data statuses comprises three statuses of ACK/NACK/Null, and they are used to indicate that the process data correctly receives the acknowledgement from the network / incorrectly receives the acknowledgement from the network / does not receive acknowledgement from the network; when a certain process is in the status of Null, the data of the process in the memory module cannot be processed at this time; the process used to transmit the new data only can select a process indicated as ACK, and the new data buffering only can select the space of the memory module corresponding to the process indicated as ACK also; and the value of the transmission resource grant indicates whether the network grants to send the process data, as any data transmission can be achieved only when having a transmission resource grant.

Specifically, the function module is used to perform the E-TFC selection (selection of the size of the new data block) according to the power information provided by the network, multiplex and combine the data according to the priority status of each logic channel buffered in the terminal, and finally select and assemble the data, that is, assemble the data from each logic channel into the new MAC-e data, and then store the new MAC-e data into the memory module.

Specifically, the memory module also stores a transmission status table which is used to maintain the number of retransmissions and the retransmission time of the data of each process, as shown in Table 2:

**Table 2 Transmission status table**

| | |
|---|---|
| The number of retransmissions (TxNum) | Retransmission Time (F_Time) |

Take the single-carrier for example, there are eight processes, and size of each of the processes is 11160bit; the memory module has a group of memory control registers each of which corresponds to each process, and each memory control register is used to maintain the transmission status table, as shown in table 2. TxNum records the number of retransmissions corresponding to the data of the current process, and TxNum is added by 1 when retransmitting at a time. When receiving the ACK, reset the register corresponding to the process with TxNum=0/F_Time=0; when reaching the maximum number of retransmissions, refresh the data memory corresponding to the process, and in the control module, the data status in the process status table corresponding to the process is changed to ACK, and the process is released so as to be used by other data to be transmitted. When a certain process receives the NACK from the network end at the first time, start up a retransmission time (F_Time) timer to record the retransmission time; when reaching to the maximum retransmission time, refresh the data memory corresponding to the process, reset the register corresponding to the process with F_Time=0/TxNum=0, and in the control module, the data status in the process status table corresponding to the process is changed to ACK, and release the data of this process. When the data status of all available processes in the control module is NACK, then refresh the data memory corresponding to the process who has the maximum F_Time, and in the control module, the data status in the process status table corresponding to the process is changed to ACK, release the data of this process, and reset the register corresponding to the process with F_Time=0/TxNum=0.

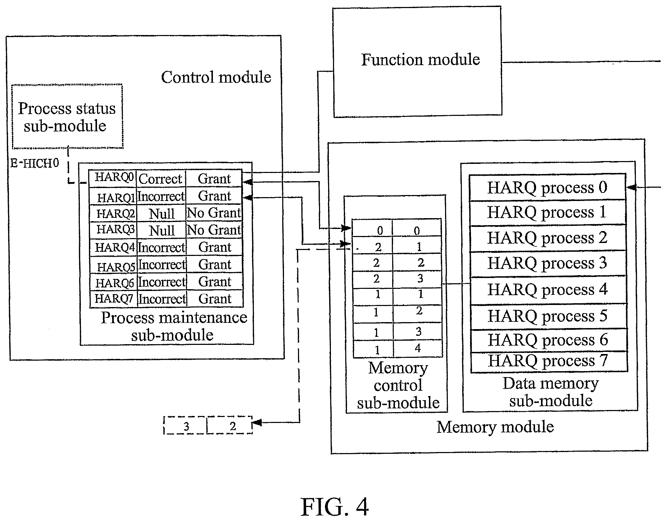

In the following, a specific application example of the present invention is used to further understand the abovementioned technical scheme, as shown in FIG. 4.

The control module comprises two sub-modules: a process status sub-module and a process maintenance sub-module. The process status sub-module is a single process module, and the process status sub-module is used to record the data status of the process according to the received NACK or ACK information corresponding to the process, and to store the data status of the process into the process maintenance sub-module. The received status of the data sending from each process can be acquired according to the time relationship between each sent enhanced physical uplink channel (E_PUCH) and the received E-HICH, since the HSUPA system in the TD-SCDMA is a system of uplink asynchronism and downlink synchronism and the time for receiving the E-HIGH corresponding to the E-PUCH of each process is determined. The received status is called as the data status of the process.

The process maintenance sub-module is a multi-process module, and it is used to maintain the data status of each process and the network grant information (i.e., the transmission resource grant information) by the process status table. When the data status of one process is ACK and there is a transmission resource grant, a interrupting notification function module is used to perform the E-TFC selection and assemble the new MAC-e data, and the new MAC-e data corresponding to the process is obtained from the memory module and is sent out; when the data status of one process is NACK and there is a transmission resource grant, the data of the process is directly obtained from the memory module to re-transmit. The process maintenance sub-module judges whether the process gets the transmission resource grant from the network.

Firstly considering the data retransmission, the transmission resource grant is assigned to the process corresponding to NACK, wherein the process is a process with the earliest retransmission time which is indicated by the F_Time; and then, if the transmission resource grant received from the network side is insufficient to support power resource or bearing resource required by all the re-transmission processes (by traversing all processes corresponding to NACK), the transmission resource grant can be assigned to the processes corresponding to ACK, the transmission resource grant is used to assemble the new data required to be sent, the process status table is updated, and the updated process status table is stored into the control register in the process maintenance sub-module.

The function module is the unique module implemented the HARQ functions in the MAC layer in the apparatus of the present invention.

As shown in FIG. 4, when the data status of the process 0 maintained by the control module is ACK and getting the transmission resource grant from the network, the function module will be triggered to assembly the new data according to the transmission data grant.

The memory module comprises two sub-modules: a memory control sub-module and a data memory sub-module. The data memory sub-module is used to buffer the MAC-e data of each process; and the memory control sub-module is used to maintain the number of retransmissions and the retransmission time of the data of each process buffered in the data memory sub-module by the transmission status table. When the process recorded in the transmission status table reaches the maximum number of retransmissions or the maximum retransmission time, the memory control sub-module notifies the data memory sub-module to release the data of the process, and notifies the process maintenance sub-module to change the data status of the process to ACK, indicating that the process can be released for further use.

As shown in FIG. 4, the process 0 receives ACK and gets the transmission resource grant from the network, and the process maintenance sub-module notifies the memory module to set the number of retransmissions and the retransmission time of this process as 0; and the register corresponding to the process is reset (F_Time=0/TxNum=0) and the buffering of the process 0 in the data memory sub-module is covered by the new data generated by the function module. When the process 1 is used to retransmit, the number of retransmissions and the retransmission time in the register should be accumulated (F_Time=3/TxNum=2), and the data corresponding to the process 1 in the data memory sub-module is continuously used.

The above description is only the preferred embodiments of the present invention and it is not intended to limit the present invention, the scope of the invention is to be determined by the appended claims.

### Industrial Applicability

The present invention provides a method and apparatus for HARQ multi-process data management in the HSUPA terminal device, and the L1 and the MAC layer work together to control the function of the HARQ module multi-process data management which is originally controlled centrally only by the MAC layer, wherein the L1 acts as the primary control and the fast scheduling of the L1 is used to implement high speed HSUPA retransmission, so that the terminal can fulfill the fast scheduling and assembling of the uplink data.

## Claims

1. A method for hybrid automatic repeat request HARQ multi-process data management in a high speed uplink packet access HSUPA terminal device, **characterized by**, comprising:
a physical layer L1 of the HSUPA terminal device maintaining each process which is used for sending HSUPA uplink process transmission data, that is, MAC-e data (201);
when the L1 receives a negative acknowledgement NACK information corresponding to one process, the L1 autonomously selecting the MAC-e data of the process from a cache without notifying a medium access control MAC layer to retransmit the MAC-e data (203); and
when the L1 receives an acknowledgement ACK information corresponding to one process, the L1 notifying the MAC layer to assemble new MAC-e data (202), and the L1 obtaining the new MAC-e data from the MAC layer and sending the new MAC-e data (203).

2. The method of claim 1, wherein:
the L1 acquires the process corresponding to the ACK or the NACK according to a timing relationship between the time of sending the MAC-e data of the process and receiving the ACK or the NACK.

3. The method of claim 1, wherein:
when the L1 receives the NACK information corresponding to one process and there is a transmission resource grant, the L1 selects the MAC-e data of the process from the cache to retransmit the MAC-e data;
when said HSUPA terminal device receives the ACK information corresponding to one process and there is a transmission resource grant, the L1 notifies the MAC layer to perform an enhanced transmission channel format combination E-TFC selection and assemble the new MAC-e data.

4. The method of claim 1, wherein:
after the MAC layer assembles the new MAC-e data according to the notification from the LI, the MAC layer buffers the new MAC-e data to the cache corresponding to the process corresponding to the L1; and
the L1 selects the new MAC-e data from the cache corresponding to the process and sends the new MAC-e data.

5. The method of any one of claims 1-4, wherein:
before the MAC layer assembles the new MAC-e data, the MAC layer performs an enhanced transmission channel format combination E-TFC selection.

6. The method of claim 1, wherein:
a control module of the L1 records a data status of the process according to the received NACK information or the received ACK information corresponding to the process, and maintains the data status of each process and transmission resource grant information by using a transmission status table;
when the data status of one process is the ACK and there is the transmission resource grant, the control module notifies a function module in the MAC layer to assemble the new MAC-e data; and said function module buffers the new MAC-e data in a memory module of the LI, and the control module selects the new MAC-e data to send;
when the data status of one process is the NACK and there is the transmission resource grant, the control module of the L1 directly obtains the MAC-e data of the process from a memory module of the L1 to retransmit the MAC-e data.

7. The method of claim 6, wherein:
the memory module of the L1 maintains the number of retransmissions and retransmission time of the data of each process by using the transmission status table; and when reaching the maximum number of retransmissions or the maximum retransmission time, the data of the process is released and the control module is notified to change the data status of the process to the ACK.

8. An apparatus for hybrid automatic repeat request HARQ multi-process data management, comprising a control module, a function module and a memory module, **characterized by**:
said control module is located in a physical layer L1 and configured to maintain each process which is used for sending high speed uplink packet access HSUPA uplink process transmission data, that is, MAC-e data; when receiving a negative acknowledgement NACK information corresponding to one process, autonomously select the MAC-e data corresponding to the process from the memory module without notifying a medium access control MAC layer and retransmit the MAC-e data; and when receiving an acknowledgement ACK information corresponding to one process, notify the function module to assemble new MAC-e data and obtain the new MAC-e data from said memory module and send the MAC-e data;
said function module is located in the MAC layer and configured to assemble the new MAC-e data according to the notification from the control module and store the new MAC-e data into the memory module; and
said memory module is located in the L1 and configured to buffer the MAC-e data of each process.

9. The apparatus of claim 8, wherein:
said control module is configured to acquire the process corresponding to the ACK or the NACK according to a timing relationship between the time of sending the MAC-e data of the process and receiving the ACK or the NACK.

10. The apparatus of claim 8, wherein:
said control module comprises a process status sub-module and a process maintenance sub-module,
said process status sub-module is configured to record a data status of the process according to the received NACK information or the received ACK information corresponding to the process, and store the data status of the process into the process maintenance sub-module; and
the process maintenance sub-module is configured to maintain the data status of each process and transmission resource grant information by a transmission status table; when the data status of one process is the ACK and there is a transmission resource grant, to notify the function module to assemble the new MAC-e data by using a interruption and obtain the new MAC-e data corresponding to the process from the memory module to send the new MAC-e data out; and when the data status of one process is the NACK and there is a transmission resource grant, to directly obtain the data of the process from the memory module to retransmit.

11. The apparatus of claim 10, wherein:
said memory module comprises a memory control sub-module and a data memory sub-module,
said data memory sub-module is configured to buffer the MAC-e data of each process; and
said memory control sub-module is configured to maintain the number of retransmissions and retransmission time of the data of each process buffered in the data memory sub-module by the transmission status table, and when the process recorded in the transmission status table reaches the maximum number of retransmissions or the maximum retransmission time, to notify the data memory sub-module to release the data of the process and notify the process maintenance sub-module to change the data status of the process to the ACK.

## Patentansprüche

1. Verfahren zur Verwaltung von Mehrfachprozessdaten der Hybrid Automatic Repeat Request (HARQ) in einer Hochgeschwindigkeits-Uplink-Paketzugang (HSUPA-)Endeinrichtung, **dadurch gekennzeichnet, dass** es umfasst:
eine Bitübertragungsschicht L1 der HSUPA-Endeinrichtung zur Wartung jedes Prozesses, der verwendet wird, um HSUPA-Uplink-Prozessübertragungsdaten zu senden, d. h. MAC-e-Daten (201);
wenn die L1 eine negative NACK-Bestätigungsnachricht empfängt, die einem Prozess entspricht, wählt die L1 selbständig die MAC-e-Daten des Prozesses aus einem Zwischenspeicher ohne Aufforderung einer (medium access control) MAC-Schicht zur Neuübertragung der MAC-e-Daten (203); und
wenn die L1 eine ACK-Bestätigungsnachricht empfängt, die einem Prozess entspricht, fordert die L1 die MAC-Schicht zum Assemblieren neuer MAC-e-Daten (202) auf und die L1 erhält die neuen MAC-e-Daten von der MAC-Schicht und sendet die neuen MAC-e-Daten (203).

2. Verfahren nach Anspruch 1, wobei:
die L1 den Prozess, der der ACK- oder der NACK entspricht, gemäß einer Zeitbeziehung zwischen der Sendezeit der MAC-e-Daten des Prozesses und dem Empfang der ACK- oder der NACK akquiriert.

3. Verfahren nach Anspruch 1, wobei:
wenn die L1 die NACK-Nachricht empfängt, die einem Prozess entspricht und eine Übertragungsressourcen-Erlaubnis vorliegt, die L1 die MAC-e-Daten des Prozesses aus dem Zwischenspeicher wählt, um die MAC-e-Daten zu übertragen;
wenn die HSUPA-Endeinrichtung die ACK-Nachricht empfängt, die einem Prozess entspricht und eine Übertragungsressourcen-Erlaubnis vorliegt, die L1 die MAC-Schicht auffordert, eine verbesserte Übertragungskanal-Formatkombination-E-TFC-Wahl bereitzustellen und die neuen MAC-e-Daten zu assemblieren.

4. Verfahren nach Anspruch 1, wobei:
nach Assemblieren der neuen MAC-e-Daten durch die MAC-Schicht entsprechend der Aufforderung durch die L1, die MAC-Schicht die neuen MAC-e-Daten im Zwischenspeicher zwischenspeichert, die dem der L1 entsprechenden Prozess entsprechen; und
die L1 die neuen MAC-e-Daten aus dem Zwischenspeicher wählt, die dem Prozess entsprechen, und die neuen MAC-e-Daten sendet.

5. Verfahren nach einem der Ansprüche 1-4, wobei:
die MAC-Schicht vor Assemblieren der neuen MAC-e-Daten durch die MAC-Schicht eine verbesserte Übertragungskanal-Formatkombination-E-TFC-Wahl bereitstellt.

6. Verfahren nach Anspruch 1, wobei:
ein Steuermodul der L1 einen Datenstatus des Prozesses aufzeichnet, entsprechend der empfangenen NACK-Nachricht oder der empfangenen ACK-Nachricht, die dem Prozess entspricht, und den Datenstatus jedes Prozesses und die Übertragungsressourcen-Erlaubnisdaten durch Verwendung einer Übertragungsstatustabelle wartet;
das Steuermodul, wenn der Datenstatus eines Prozesses die ACK ist und eine Übertragungsressourcen-Erlaubnis vorliegt, ein Funktionsmodul in der MAC-Schicht auffordert, die neuen MAC-e-Daten zu assemblieren; und das Funktionsmodul die neuen MAC-e-Daten in einem Speichermodul der L1 zwischenspeichert und das Steuermodul die zu sendenden neuen MAC-e-Daten wählt;
das Steuermodul der L1, wenn der Datenstatus eines Prozesses die NACK ist und eine Übertragungsressourcen-Erlaubnis vorliegt, die MAC-e-Daten des Prozesses direkt von einem Speichermodul der L1 erhält, um die MAC-e-Daten neu zu übertragen.

7. Verfahren nach Anspruch 6, wobei:
das Speichermodul der L1 die Anzahl von Neuübertragungen und Neuübertragungszeit der Daten jedes Prozesses durch Verwendung der Übertragungsstatustabelle wartet; und wenn die maximale Zahl von Neuübertragungen oder die maximale Neuübertragungszeit erreicht ist, die Daten des Prozesses freigegeben werden und das Steuermodul aufgefordert wird, den Datenstatus des Prozesses auf die ACK zu ändern.

8. Einrichtung zur Verwaltung von Mehrfachprozessdaten der Hybrid Automatic Repeat Request (HARQ), umfassend ein Steuermodul, ein Funktionsmodul und ein Speichermodul, **dadurch gekennzeichnet, dass**:
das Steuermodul in einer Bitübertragungsschicht L1 angeordnet und zur Wartung jedes Prozesses ausgebildet ist, der zum Senden von Hochgeschwindigkeits-Uplink-Paketzugang (HSUPA-)Uplink-Prozessübertragungsdaten, d.h. MAC-e-Daten verwendet wird; wenn eine negative NACK-Bestätigungsnachricht empfangen wird, die einem Prozess entspricht, es selbständig die dem Prozess entsprechenden MAC-e-Daten aus dem Speichermodul ohne Aufforderung einer (medium access control) MAC-Schicht auswählen und eine Neuübertragung der MAC-e-Daten vornehmen; und wenn es eine einem Prozess entsprechende ACK-Bestätigungsnachricht empfängt, das Funktionsmodul zum Assemblieren neuer MAC-e-Daten auffordern, und die neuen MAC-e-Daten aus dem Speichermodul erhalten und die neuen MAC-e-Daten senden;
das Funktionsmodul in der MAC-Schicht angeordnet und ausgebildet ist, um die neuen MAC-e-Daten entsprechend der Aufforderung durch das Steuermodul zu assemblieren und die neuen MAC-e-Daten in dem Speichermodul zu speichern; und
das Speichermodul in der L1 angeordnet und ausgebildet ist, um die MAC-e-Daten jedes Prozesses zwischenzuspeichern.

9. Einrichtung nach Anspruch 8, wobei:
das Steuermodul ausgebildet ist, um den der der ACK- oder der NACK entsprechenden Prozess gemäß einer Zeitbeziehung zwischen der Sendezeit der MAC-e-Daten des Prozesses und dem Empfang der ACK- oder NACK zu akquirieren.

10. Einrichtung nach Anspruch 8, wobei:
das Steuermodul ein Prozessstatus-Untermodul und ein Prozesswartungs-Untermodul umfasst,
das Prozessstatus-Untermodul ausgebildet ist, um einen Datenstatus des Prozesses entsprechend der empfangenen NACK-Nachricht oder der dem Prozess entsprechenden, empfangenen ACK-Nachricht aufzuzeichnen und den Datenstatus des Prozesses im Prozesswartungs-Untermodul zu speichern; und
das Prozesswartungs-Untermodul ausgebildet ist, um den Datenstatus jedes Prozesses und Übertragungsressourcen-Erlaubnisdaten durch eine Übertragungsstatustabelle zu warten; wenn der Datenstatus eines Prozesses die ACK ist und eine Übertragungsressourcen-Erlaubnis vorliegt, das Funktionsmodul aufzufordern, die neuen MAC-e-Daten durch Verwendung einer Unterbrechung zu assemblieren und die neuen, dem Prozess entsprechenden MAC-e-Daten aus dem Speichermodul zu erhalten, um die neuen MAC-e-Daten auszusenden; und wenn der Datenstatus eines Prozesses die NACK ist und eine Übertragungsressourcen-Erlaubnis vorliegt, die Daten des Prozesses direkt vom Speichermodul zu erhalten, um sie neu zu übertragen.

11. Einrichtung nach Anspruch 10, wobei:
das Speichermodul ein Speichersteuerungs-Untermodul und ein Datenspeicher-Untermodul umfasst,
das Datenspeicher-Untermodul ausgebildet ist, um die MAC-e-Daten jedes Prozesses zwischenzuspeichern; und
das Speichersteuerungs-Untermodul ausgebildet ist, um die Anzahl der Neuübertragungen und die Neuübertragungszeit der Daten jedes Prozesses, die im Datenspeicher-Untermodul zwischengespeichert sind, durch die Übertragungsstatustabelle zu warten; und wenn der in der Übertragungsstatustabelle aufgezeichnete Prozess die maximale Anzahl von Neuübertragungen oder die maximale Neuübertragungszeit erreicht, das Datenspeicher-Untermodul aufzufordern, die Daten des Prozesses freizugeben und das Prozesswartungs-Untermodul aufzufordern, den Datenstatus des Prozesses auf die ACK zu ändern.

## Revendications

1. Procédé de gestion de données de multiprocessus de demande de répétition automatique hybride HARQ dans un dispositif terminal d'accès par paquets de liaison montante haut débit HSUPA, **caractérisé en ce qu'**il comprend :
le maintien par une couche physique L1 du dispositif terminal HSUPA de chaque processus qui est utilisé pour la l'émission de données de transmission de processus de liaison montante HSUPA, c'est-à-dire de données MAC-e (201) ;
quand la L1 reçoit une information d'accusé de réception négatif NACK correspondant à un processus, la sélection de manière autonome par la L1 des données MAC-e du processus à partir d'un cache sans notifier à une couche de contrôle d'accès au support MAC de retransmettre les données MAC-e (203) ; et
quand la L1 reçoit une information d'accusé de réception ACK correspondant à un processus, la notification par la L1 à la couche MAC d'assembler de nouvelles données MAC-e (202), et l'obtention par la L1 des nouvelles données MAC-e à partir de la couche MAC et la transmission des nouvelles données MAC-e (203).

2. Procédé selon la revendication 1, dans lequel :
la L1 acquiert le processus correspondant à l'ACK ou au NACK en fonction d'une relation de synchronisation entre le temps de l'émission de données MAC-e du processus et la réception de l'ACK ou du NACK.

3. Procédé selon la revendication 1, dans lequel :
quand la L1 reçoit l'information NACK correspondant à un processus et il existe un octroi de ressources de transmission, la L1 sélectionne les données MAC-e du processus à partir du cache pour retransmettre les données MAC-e ;
quand ledit dispositif terminal HSUPA reçoit l'information ACK correspondant à un processus et il existe un octroi de ressources de transmission, la L1 notifie à la couche MAC d'effectuer une sélection de combinaison de format de canal de transmission amélioré E-TFC et d'assembler les nouvelles données MAC-e.

4. Procédé selon la revendication 1, dans lequel :
après que la couche MAC assemble les nouvelles données MAC-e en fonction de la notification provenant de la L1, la couche MAC met en mémoire tampon les nouvelles données MAC-e dans le cache correspondant au processus correspondant à la L1 ; et
la L1 sélectionne les nouvelles données MAC-e à partir du cache correspondant au processus et émet les nouvelles données MAC-e.

5. Procédé selon l'une quelconque des revendications 1 à 4, dans lequel :
avant que la couche MAC assemble les nouvelles données MAC-e, la couche MAC effectue une sélection de combinaison de format de canal de transmission amélioré E-TFC.

6. Procédé selon la revendication 1, dans lequel :
un module de commande de la L1 enregistre un état de données du processus en fonction de l'information NACK reçue ou de l'information ACK reçue correspondant au processus, et maintient l'état de données de chaque processus et des informations d'octroi de ressources de transmission en utilisant une table d'états de transmission ;
quand l'état de données d'un processus est l'ACK et il existe l'octroi de ressources de transmission, le module de commande notifie à un module de fonctions dans la couche MAC d'assembler les nouvelles données MAC-e ; et ledit module de fonctions met en mémoire tampon les nouvelles données MAC-e dans un module de mémoire de la L1, et le module de commande sélectionne les nouvelles données MAC-e à émettre ;
quand l'état de données d'un processus est le NACK et il existe l'octroi de ressources de transmission, le module de commande de la L1 obtient directement les données MAC-e du processus à partir d'un module de mémoire de la L1 pour retransmettre les données MAC-e.

7. Procédé selon la revendication 6, dans lequel :
le module de mémoire de la L1 maintient le nombre de retransmissions et le temps de retransmission des données de chaque processus en utilisant la table d'états de transmission ; et quand le nombre maximal de retransmissions ou le temps de retransmission maximal est atteint, les données du processus sont libérées et le module de commande reçoit la notification de changer l'état de données du processus au ACK.

8. Dispositif de gestion de données de multiprocessus de demande de répétition automatique hybride HARQ, comprenant un module de commande, un module de fonctions et un module de mémoire, **caractérisé en ce que** :
ledit module de commande est situé dans une couche physique L1 et configuré pour maintenir chaque processus qui est utilisé pour émettre des données de transmission de processus de liaison montante d'accès par paquets de liaison montante haut débit HSUPA, c'est-à-dire des données MAC-e ; quand il reçoit une information d'accusé de réception négatif NACK correspondant à un processus, sélectionner de manière autonome les données MAC-e correspondant au processus à partir du module de mémoire sans notification à une couche de contrôle d'accès au support MAC et retransmettre les données MAC-e ; et quand il reçoit une information d'accusé de réception ACK correspondant à un processus, notifier au module de fonctions d'assembler de nouvelles données MAC-e et obtenir les nouvelles données MAC-e à partir dudit module de mémoire et émettre les données MAC-e ;
ledit module de fonctions est situé dans la couche MAC et configuré pour assembler les nouvelles données MAC-e en fonction de la notification provenant du module de commande et stocker les nouvelles données MAC-e dans le module de mémoire ; et
ledit module de mémoire est situé dans la L1 et configuré pour mettre en mémoire tampon les données MAC-e de chaque processus.

9. Dispositif selon la revendication 8, dans lequel :
ledit module de commande est configuré pour acquérir le processus correspondant à l'ACK ou au NACK en fonction d'une relation de synchronisation entre le temps de la transmission de données MAC-e du processus et la réception de l'ACK ou du NACK.

10. Dispositif selon la revendication 8, dans lequel :
ledit module de commande comprend un sous-module d'état de processus et un sous-module de maintenance de processus,
ledit sous-module d'état de processus est configuré pour enregistrer un état de données du processus en fonction de l'information NACK reçue ou de l'information ACK reçue correspondant au processus, et stocker l'état de données du processus dans le sous-module de maintenance de processus ; et
le sous-module de maintenance de processus est configuré pour maintenir l'état de données de chaque processus et l'information d'octroi de ressources de transmission par une table d'états de transmission ;
quand l'état de données d'un processus est l'ACK et il existe un octroi de ressources de transmission, pour notifier au module de fonctions d'assembler les nouvelles données MAC-e en utilisant une interruption et obtenir les nouvelles données MAC-e correspondant au processus à partir du module de mémoire pour émettre les nouvelles données MAC-e out ;
et quand l'état de données d'un processus est le NACK et il existe un octroi de ressources de transmission, pour obtenir directement les données du processus à partir du module de mémoire à retransmettre.

11. Dispositif selon la revendication 10, dans lequel :
ledit module de mémoire comprises un sous-module de commande de mémoire et un sous-module de mémoire de données,
ledit sous-module de mémoire de données est configuré pour mettre en mémoire tampon les données MAC-e de chaque processus ; et
ledit sous-module de commande de mémoire est configuré pour maintenir le nombre de retransmissions et le temps de retransmission des données de chaque processus mis en mémoire tampon dans le sous-module de mémoire de données par la table d'états de transmission, et quand le processus enregistré dans la table d'états de transmission atteint le nombre maximal de retransmissions ou le temps de retransmission maximal, pour notifier au sous-module de mémoire de données de libérer les données du processus et notifier au sous-module de maintenance de processus de changer l'état de données du processus à l'ACK.
